# FASCICULE DE BREVET EUROPEEN

(11) **EP 2 005 110 B1**
(45) Date de publication et mention de la délivrance du brevet: **22.12.2010**
(21) Numéro de dépôt: 07731871.5
(22) Date de dépôt: 04.04.2007
(51) Int. Cl.: G01B 21/04, B23Q 17/22

(54) **DISPOSITIF DE RECALAGE EN BUTÉE D'UN OUTIL DE MACHINE D'USINAGE**
EINRICHTUNG ZUM ZURÜCKSETZEN EINES MASCHINENWERKZEUGS MIT ANSCHLAG
DEVICE FOR ABUTTED RESETTING OF A MACHINE-TOOL

(30) Priorité: 11.04.2006 FR 0651308
(43) Date de publication de la demande: 24.12.2008
(73) Titulaire: Peugeot Citroën Automobiles S.A., 78140 Vélizy Villacoublay (FR)
(72) Inventeur: VIDAL, Olivier, 42170 St Just St Rambert (FR); BARRA, Christian, 42170 St Just St Rambert (FR)
(86) Numéro de dépôt international: PCT/FR2007/051068
(87) Numéro de publication internationale: WO 2007/116182

(56) Documents cités:
- EP-A- 0 389 108
- EP-A- 0 638 781
- EP-A- 1 316 777
- DE-A1- 19 858 154
- FR-A- 2 792 720

## Description

La présente invention est relative à un dispositif pour le recalage de position d'un outil porté par une machine d'usinage vis-à-vis d'une pièce à usiner au moyen de cet outil, ce dispositif permettant en particulier de réaliser, à l'aide d'un palpeur ou analogue disposé selon un des axes de travail du porte outil, une mesure selon les trois axes de l'espace, en vue d'ajuster en permanence le positionnement relatif de l'outil et de la pièce (voir, par exemple, EP-0638 781-A)

On sait que de la façon la plus générale, les ateliers de production ou centres d'usinage où s'effectuent à grande vitesse et avec une précision élevée des usinages répétitifs de pièces en série au moyen de machines outils, de préférence à commande numérique, l'ambiance n'est pas climatisée de sorte que peuvent y être constatées des variations de température non négligeables, cette température pouvant osciller entre 15 et 35° usuellement selon l'heure du jour et la période de l'année, avec des gradients de température plus ou moins importants.

Il en résulte des contraintes sur les diverses parties de la machine comme sur les pièces à usiner, et des variations des cotes d'usinage à respecter pour chaque pièce, ces variations étant préjudiciables à une production fiable, respectant des tolérances serrées sur les pièces fabriquées.

Pour tenir compte de ces contraintes sur les organes de la machine et sur les pièces, il est donc nécessaire de recaler, avec une fréquence plus ou moins grande, les origines des parties mobiles de cette machine, notamment sur celles qui portent l'outil d'usinage, c'est-à-dire les références de mesure des cotes de cet outil selon les trois axes de l'espace de ses déplacements commandés lors de l'opération réalisée sur la pièce à usiner, avec une précision qui reste toujours impérativement fixée en deçà de seuils imposés.

On sait aussi que ces machines outils, qui comprennent de façon schématiquement résumée, un porte outil muni d'une ou plusieurs broches d'usinage pouvant être substituées l'une à l'autre sur le porte outil selon la nature de l'usinage à effectuer sur la pièce, cet outil étant déplaçable selon un premier axe, dit axe Z, vis-à-vis de la pièce à usiner immobilisée sur un porte pièce fournissant une cote de référence absolue par rapport à la broche du porte outil.

Celui-ci est de plus apte à être déplacé selon les directions d'axes X et Y, respectivement perpendiculaires entre eux et à la direction de l'axe Z, ces mouvements de translation étant le cas échéant combinés à des mouvements de rotation autour de ces axes, l'amplitude de ces translations selon chaque axe du porte outil par rapport au porte pièce étant déterminée séparément et en boucle ouverte en fonction de l'usinage à réaliser.

Or, si les moyens de support et de déplacement du porte outil selon l'axe Z sont simples et aisés à réaliser en raison d'une masse relativement limitée de ces moyens, il en va autrement en ce qui concerne les équipements mobiles selon les axes X et Y, l'équipement de commande du déplacement selon l'axe X portant généralement l'équipement de commande du porte outil selon l'axe Y, qui lui-même supporte le porte outil mobile selon l'axe Z, ces deux équipements présentant des masses importantes, largement supérieure à celle du porte outil proprement dit.

Le recalage périodique de la machine outil et en particulier de ses équipements selon les trois axes précités, est nécessaire pour déterminer par une mesure directe la cote absolue de l'outil par rapport à une référence donnée afin de tenir compte des variations climatiques pouvant modifier le positionnement relatif de ces équipements au cours du fonctionnement de la machine, cette référence étant liée au porte pièce. Ce recalage est donc difficile et constitue une opération complexe.

Une solution connue consiste à utiliser en permanence ou à intervalles de temps prédéterminés, un palpeur qui suit le contour de la pièce à usiner et mesure le décalage éventuel du point de contact par rapport à une référence enregistrée, de manière à permettre d'agir sur les parties mobiles de la machine pour respecter les cotes d'usinage avec la précision imposée par les tolérances à respecter.

Un tel palpeur est cependant fragile, complexe d'utilisation et coûteux d'entretien. Il est par ailleurs sensible aux copeaux d'usinage et au liquide de refroidissement projeté sur la pièce au cours de ce dernier, qui risquent de le détériorer rapidement.

La présente invention concerne une machine d'usinage comprenant un palpeur et une butée de recalage des équipements mobiles de la machine outil, notamment à commande numérique, qui simplifie de façon essentielle la méthodologie mise en oeuvre pour effectuer ce recalage, grâce à l'utilisation du palpeur pouvant se substituer lors de la mesure à l'outil d'usinage, le palpeur coopérant avec une butée spéciale montée sur le porte pièce et fournissant les cotes absolues de positionnement selon les trois axes de l'espace, permettant d'en déduire les variations relatives de positionnement de l'outil par rapport aux références imposées par l'opération d'usinage à effectuer.

A cet effet, la machine d'usinage considéré, pour le recalage en butée des origines absolues de la machine d'usinage, notamment à commande numérique, munie d'un porte outil propre à se déplacer selon les directions respectivement perpendiculaires des trois axes X, Y et Z de l'espace en regard d'une pièce à usiner montée sur un porte pièce fixe par rapport à l'outil mobile, se caractérise en ce qu'il comporte un palpeur apte à se substituer à l'outil d'usinage de la machine pour un déplacement selon l'axe Z du porte outil, ce palpeur étant adapté à venir en contact avec un effort limité contre une butée fixée sur le porte pièce et comportant une face plane s'étendant perpendiculairement à la direction de l'axe Z et deux autres faces dont les plans sont inclinés sur cet axe, les normales à ces plans inclinés délimitant respectivement avec la direction de l'axe Z deux surfaces planes perpendiculaires l'une à l'autre pour matérialiser les directions des axes X et Y, l'angle des plans des faces inclinées de la butée, matérialisant les directions des axes X et Y avec le plan de la face plane perpendiculaire à l'axe Z, est égal à 30° et le palpeur est constitué par un corps de révolution propre à être fixé sur le porte outil de la machine selon la direction de l'axe Z et présente une extrémité sphérique, réalisant un contact ponctuel avec chacun des plans de la butée.

Dans une variante de réalisation, la butée présente la forme d'une pyramide tronquée, avec une face plane et deux de ses faces latérales consécutives inclinées.

Dans une autre variante, la butée peut comporter trois éléments distincts, dont chacun présente une des faces propre à coopérer avec le palpeur pour matérialiser les directions des axes X, Y et Z.

Grâce à ces dispositions, le déplacement du palpeur avec le porte outil selon l'axe Z fournit, en fonction de la face de la butée rencontrée contre laquelle la partie sphérique de ce palpeur vient en contact, une information sur le positionnement relatif de la pièce par rapport à l'outil, permettant le recalage des cotes absolues d'usinage, en réalisant une correction des dérives thermiques intervenues en fonctionnement.

Chaque contact du palpeur avec une des faces de la butée referme momentanément la boucle de mesure en permettant de déterminer immédiatement les erreurs de positionnement, qui sont directement mesurées et corrigées numériquement par la commande de la machine qui recale ainsi l'outil par rapport à la pièce.

D'autres caractéristiques d'un dispositif de recalage en butée d'un outil de machine d'usinage conforme à l'invention, apparaîtront encore à travers la description qui suit d'un exemple de réalisation donné à titre indicatif et non limitatif, en référence aux dessins annexés sur lesquels :
- La Figure 1 est un schéma de principe, illustrant les éléments fixes et mobiles d'une machine outil à commande numérique comportant un dispositif conforme à l'invention.
- La Figure 2 est une vue en perspective du palpeur mis en oeuvre avec le dispositif de la Figure 1.
- La Figure 3 est une vue également en perspective, de la butée adaptée à coopérer avec le palpeur de la Figure 2, selon un premier mode de réalisation.
- La Figure 4 est une vue en perspective d'une variante de réalisation de la butée selon la Figure 3.

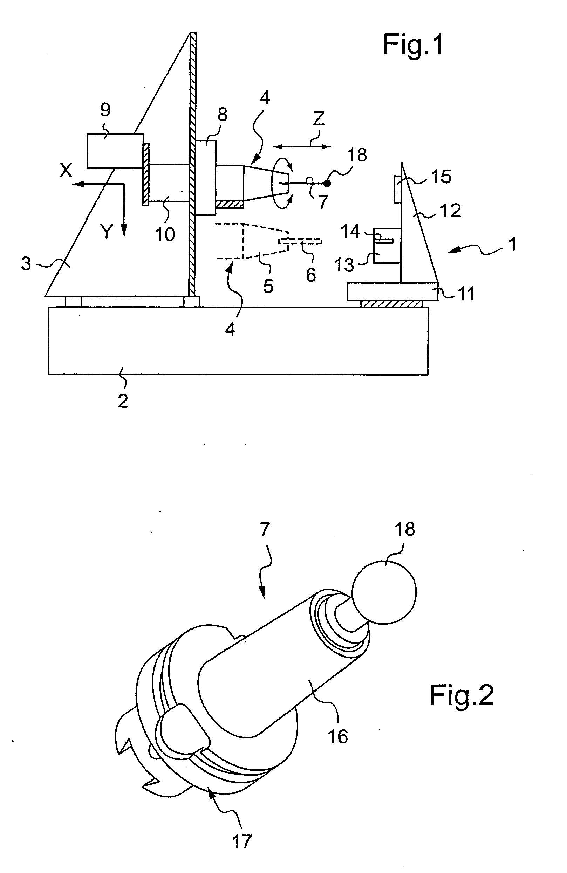

Sur la Figure 1, la référence 1 désigne dans son ensemble une machine d'usinage, de préférence à commande numérique, dont les éléments essentiels sont très schématiquement suggérés sur le dessin, ces éléments étant en eux-mêmes bien connus dans la technique et n'exigeant pas qu'ils soient décrits ici plus en détail.

Cette machine comporte un bâti fixe 2 sur lequel est disposé un ensemble 3 supportant un porte outil 4 constitué par un mandrin de fixation 5 pour un outil d'usinage, du genre d'une broche 6 de perçage ou de fraisage notamment.

Le mandrin de fixation 5 peut tourner sur lui-même de manière à permettre le montage, à côté de la broche 6, d'un palpeur 7 susceptible de se substituer momentanément en position à la broche, au moyen d'un mécanisme classique à barillet ou analogue.

L'ensemble 3 comporte un mécanisme 8 dont le détail de la réalisation n'importe pas non plus à l'invention, sauf à préciser que ce mécanisme est agencé de manière à permettre d'imprimer notamment à la broche 6 et le cas échéant au palpeur 7, un mouvement de déplacement selon la direction d'un premier axe, schématisé en Z sur le dessin.

Cet ensemble comporte également d'autres mécanismes, respectivement 9 et 10, propres à permettre de communiquer au porte outil 4 des déplacements indépendants du précédent, s'effectuant selon deux axes, respectivement X et Y, qui sont perpendiculaires entre eux et à l'axe Z, ces deux axes étant schématiquement figurés sur le dessin avec l'axe X en fait pivoté de 90° pour apparaître dans le plan de la figure et faciliter la compréhension du montage.

Le bâti 2 comporte par ailleurs un support 11 pour un porte pièce 12 sur lequel la pièce à usiner 13 est convenablement immobilisée en regard de la broche 6, laquelle est par exemple prévue pour réaliser dans cette pièce un perçage borgne 14, consécutivement au déplacement de cette broche selon la direction de l'axe Z, une fois convenablement positionnée devant la pièce par déplacement du porte outil 4 monté sur l'ensemble 3 selon les directions des deux autres axes X et Y.

Par suite des variations climatiques dans l'environnement de la machine 1 et pour les raisons déjà exposées, il est nécessaire de procéder à intervalles de temps appropriés à un recalage en butée des origines de cette machine, c'est-à-dire en particulier de la cote absolue qui définit la position relative de la broche 6 vis-à-vis de la pièce 13, afin que les cotes d'usinage de cette dernière respectent les tolérances imposées, nonobstant les variations qui résultent des écarts de la température ambiante en cours de fonctionnement.

Dans ce but et conformément à l'invention, on dispose sur le porte pièce 12, en regard du palpeur 7, une butée 15, la structure particulière de ces deux éléments étant plus spécialement illustrée sur les Figures 2 à 4.

Sur la Figure 2, on voit notamment que le palpeur 7 comporte un doigt axial 16 muni à une extrémité d'un ensemble 17 permettant son montage et son immobilisation sur le porte outil 4, cet ensemble comportant des moyens de fixation dont le détail est sans incidence sur les caractéristiques du dispositif de l'invention.

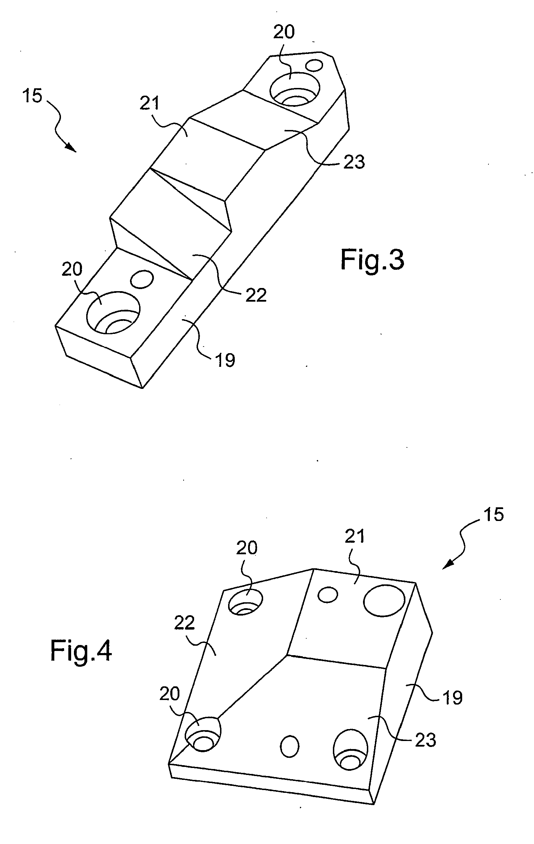

A l'opposé de l'ensemble 17, le doigt 16 comporte une extrémité sphérique 18, destinée à venir en contact avec la butée 15 dont les Figures 3 et 4 illustrent deux variantes de réalisation.

Sur la Figure 3, la butée 15 est formée d'un bloc métallique 19 muni de perçages 20 permettant sa fixation sur le porte pièce 12 comme représenté sur la Figure 1.

Le bloc 19 comporte trois faces, respectivement 21, 22 et 23, sur lesquelles l'extrémité sphérique 18 du palpeur 7 est susceptible de venir en contact consécutivement à un déplacement approprié du porte outil 4.

La face 21 s'étend perpendiculairement à la direction de l'axe Z selon laquelle se déplace axialement le palpeur 7. Les faces 22 et 23 sont inclinées sur la face 21 avec un angle choisi égal à 30° dans l'exemple considéré, ces faces étant réalisées de telle sorte que les normales à ces plans inclinés délimitent respectivement avec la direction de l'axe Z deux surfaces planes perpendiculaires l'une à l'autre permettant ainsi de matérialiser les directions des axes X et Y.

Grâce à ces dispositions, le contact de l'extrémité sphérique 18 du palpeur 7 avec la face 21, perpendiculaire à l'axe Z, permet d'obtenir une mesure directe du décalage selon la direction de cet axe. En revanche, les décalages constatés selon les directions des axes X et Y, par contact du palpeur avec les deux autres faces 22 et 23 respectivement, font intervenir, non seulement un déplacement selon la direction de l'axe Z comme précédemment, mais également la tangente de l'angle d'inclinaison de ces faces, soit ici 0,577 pour un angle de 30°.

La Figure 4 illustre une variante de réalisation de la butée 15 où le bloc métallique 19, comportant les trois faces de mesure 21, 22 et 23, présente la forme d'une pyramide tronquée, les faces 22 et 23 formant deux côtés latéraux consécutifs de cette dernière.

On réalise ainsi un dispositif de recalage en butée pour machine outil de conception très simple, utilisant un palpeur rigide à déplacement axial et une pièce de contact présentant trois faces dont l'une est perpendiculaire à l'axe Z et dont les deux autres renvoient les axes X et Y sur la direction de ce même axe Z avec une pente appropriée, choisie de 30° dans l'exemple décrit mais qui pourrait être différente dans d'autres modes de réalisation.

Ce dispositif permet d'effectuer une mesure précise et directe de la position de la broche vis-à-vis de la pièce à usiner, les écarts constatés par rapport aux cotes imposées étant repris par la commande numérique de la machine à intervalles de temps réguliers, qui en intervenant directement dans la chaîne cinématique de celle-ci, permet un contrôle précis et renouvelable selon toute fréquence appropriée au type d'usinage réalisé.

Ce dispositif utilise des pièces qui sont parfaitement robustes, pratiquement indéformables et d'un coût limité, insensibles à la présence du liquide de refroidissement de la pièce en cours d'usinage et aux copeaux produits, ces dispositions améliorant ainsi les performances de la machine. L'effort de contact entre le palpeur et la butée peut par ailleurs être facilement contrôlé et par suite limité en deçà d'un seuil donné.

Bien entendu, il va de soi que l'invention ne limite pas aux exemples plus spécialement décrits ci-dessus et représentés sur les dessins annexés ; elle en embrasse au contraire toutes les variantes et adaptations pratiques. En particulier, le dispositif proposé permet de corriger, non seulement des décalages axiaux, mais aussi des variations de positions angulaires, par mesures effectuées sur deux points distincts sur chaque axe, indépendamment l'une de l'autre.

Le dispositif envisagé peut également prévoir que le palpeur coopérant avec la butée de contrôle soit fixé à demeure sur le porte outil de la machine trois axes, sans changement ou permutation de cet outil, le palpeur étant mis en oeuvre de manière indépendante de ce dernier. De même, le recalage du porte outil pourrait s'effectuer directement sur la pièce, notamment lorsque celle-ci est usinée selon les trois directions X, Y et Z.

## Revendications

1. Machine d'usinage (1) comprenant un palpeur, une butée pour le recalage en butée des origines absolues de la machine d'usinage (1), notamment à commande numérique, munie d'un porte outil (4) propre à se déplacer selon les directions respectivement perpendiculaires des trois axes X, Y et Z de l'espace en regard d'une pièce à usiner (13) montée sur un porte pièce (12) fixe par rapport à l'outil mobile (6), le palpeur (7) étant constitué par un corps de révolution (16) propre à être fixé sur le porte outil (4) de la machine selon la direction de l'axe Z et présentant une extrémité sphérique (18), le palpeur (7) étant apte à se substituer à l'outil d'usinage de la machine pour un déplacement selon l'axe Z du porte outil (4), le palpeur étant adapté à venir en contact avec un effort limité contre la butée (15) fixée sur le porte pièce (12) et comportant une face plane (21) s'étendant perpendiculairement à la direction de l'axe z, **caractérisée en ce que** la antée comporte deux autres faces (22, 23) dont les plans sont inclinés sur cet axe, les normales à ces plans inclinés délimitant respectivement avec la direction de l'axe Z deux surfaces planes perpendiculaires l'une à l'autre pour matérialiser les directions des axes X et Y, **en ce que** l'angle des plans des faces inclinées (22,23) de la butée (15), matérialisant les directions des axes X et Y avec le plan de la face plane (21) perpendiculaire à l'axe Z, est égal à 30°, et **en ce que**, l'extrémité sphérique du palpeur pouvant réaliser un contact ponctuel avec chacun des plans (21,22,23) de la butée (15).

2. Machine d'usinage (1) selon la revendication 1, **caractérisé en ce que** la butée présente la forme d'une pyramide tronquée, avec une face plane et deux de ses faces latérales consécutives inclinées.

3. Machine d'usinage (1) selon la revendication 1, **caractérisé en ce que** la butée (15) comporte trois éléments distincts, dont chacun présente une des faces (21, 22, 23) propre à coopérer avec le palpeur (7) pour matérialiser les directions des axes X, Y et Z.

## Claims

1. Machine-tool (1) comprising a sensor and a stop for resetting the absolute origins of the machine-tool (1), said machine-tool being in particular digitally controlled and equipped with a tool-holder (4) able to be displaced in the respectively perpendicular directions of the three axes X, Y and Z in the space opposite a part to be machined (13) that is mounted on a part-holder (12) which is stationary in relation to the movable tool (6), the sensor (7) consisting of a revolving body (16) able to be attached to the tool-holder (4) of the machine in the direction of the axis Z and having a spherical end (18), the sensor (7) being able to take the place of the machining tool of the machine for a displacement in the axis Z of the tool-holder (4), the sensor being able to come into contact with limited force against the stop (15) which is attached to the part-holder (12) and comprises a planar face (21) extending perpendicular to the direction of the axis Z, **characterised in that** the stop comprises two other faces (22, 23) having planes that are inclined relative to this axis, the normals to these inclined planes respectively delimiting with the direction of the axis Z two mutually perpendicular planar surfaces for embodying the directions of the axes X and Y, **in that** the angle of the planes of the inclined faces (22, 23) of the stop (15), embodying the directions of the axes X and Y with the plane of the planar face (21) perpendicular to the axis Z, is equal to 30°, and **in that** the spherical end of the sensor can enter into point contact with each of the planes (21, 22, 23) of the stop (15).

2. Machine-tool (1) according to claim 1, **characterised in that** the stop has the shape of a truncated pyramid, with one planar face and two of its consecutive lateral faces inclined.

3. Machine-tool (1) according to claim 1, **characterised in that** the stop (15) comprises three separate elements, each of which possesses one of the faces (21, 22, 23) able to cooperate with the sensor (7) in order to embody the directions of the axes X, Y and Z.

## Patentansprüche

1. Bearbeitungsmaschine (1), umfassend einen Taster, einen Anschlag zur Anschlageinstellung von absoluten Nullpunkten der Bearbeitungsmaschine (1), insbesondere mit digitaler Steuerung, wobei die Bearbeitungsmaschine (1) mit einem Werkzeughalter (4) ausgestattet ist, der sich gemäß der jeweils senkrechten Richtungen von drei Raumachsen X, Y und Z in Bezug auf ein zu bearbeitendes Werkstück (13) bewegen kann, das auf einem Werkstückhalter (12) montiert ist, der in Bezug auf das bewegliche Werkzeug (6) fixiert ist, wobei der Taster (7) von einem Drehkörper (16) gebildet wird, der auf dem Werkzeughalter (4) der Maschine gemäß der Richtung der Z-Achse fixiert werden kann, und ein Kugelende (18) aufweist, wobei der Taster (7) für eine Bewegung gemäß der Z-Achse des Werkzeughalters (4) an die Stelle des Bearbeitungswerkzeuges der Maschine treten kann, wobei der Taster dazu eingerichtet ist, mit einem begrenzten Kraftaufwand mit dem Anschlag (15) in Kontakt zu kommen, der auf dem Werkstückhalter (12) angebracht ist und eine ebene Fläche (21) umfasst, die sich senkrecht zur Richtung der Z-Achse erstreckt, **dadurch gekennzeichnet, dass** der Anschlag zwei weitere Flächen (22, 23) umfasst, deren Ebenen auf dieser Achse geneigt sind, wobei die Normalen auf diese geneigten Ebenen jeweils mit der Richtung der Z-Achse zwei zueinander senkrecht verlaufende ebene Oberflächen begrenzen, um die Richtungen der X-Achse und der Y-Achse gegenständlich darzustellen, dass der Winkel der Ebenen der geneigten Flächen (22, 23) des Anschlages (15), die die Richtungen der X-Achse und der Y-Achse mit der Ebene der ebenen Fläche (21), die senkrecht zur Z-Achse verläuft, gegenständlich darstellen, 30° beträgt, und dass das Kugelende des Tasters einen punktuellen Kontakt mit jeder der Ebenen (21, 22, 23) des Anschlages (15) herstellen kann.

2. Bearbeitungsmaschine (1) nach Anspruch 1, **dadurch gekennzeichnet, dass** der Anschlag die Form eines Pyramidenstumpfes mit einer ebenen Fläche und zwei aufeinander folgenden, geneigten Seitenflächen aufweist.

3. Bearbeitungsmaschine (1) nach Anspruch 1, **dadurch gekennzeichnet, dass** der Anschlag (15) drei verschiedene Elemente umfasst, von denen jedes eine der Flächen (21, 22, 23) aufweist, die mit dem Taster (7) zusammenwirken können, um die Richtungen der X-Achse, der Y-Achse und der Z-Achse gegenständlich darzustellen.
